# EUROPÄISCHE PATENTSCHRIFT

(11) **EP 3 467 541 B1**
(45) Veröffentlichungstag und Bekanntmachung des Hinweises auf die Patenterteilung: **05.01.2022**
(21) Anmeldenummer: 17195025.6
(22) Anmeldetag: 05.10.2017
(51) Int. Cl.: G01B 21/22, G01C 15/00, G01S 17/86, G01S 17/08

(54) **SENSORMODUL**
SENSOR MODULE
MODULE DE CAPTEUR

(43) Veröffentlichungstag der Anmeldung: 10.04.2019
(73) Patentinhaber: Leica Geosystems AG, 9435 Heerbrugg (CH)
(72) Erfinder: BÖSCH, Thomas, 6890 Lustenau (AT); HAMMERER, Markus, 6833 Fraxern (AT)
(74) Vertreter: Kaminski Harmann

(56) Entgegenhaltungen:
- DE-A1- 10 214 742
- DE-A1-102008 042 440
- DE-A1-102009 040 468
- FR-A1- 2 876 445
- US-A1- 2014 378 184

## Beschreibung

Die vorliegende Erfindung betrifft eine modular mit einem handhaltbaren Entfernungsmessgerät verbindbare Sensoreinheit ("Winkelmessmodul") sowie ein modular aufgebautes System aus einem handhaltbaren Entfernungsmessgerät und einer solchen Sensoreinheit.

In vielen Anwendungen werden Verfahren und Systeme zur Entfernungsmessung verwendet. Beispiele hierfür sind ausgesprochen präzise Vermessungen in geodätischen Applikationen, aber auch Messaufgaben im Bereich der Bauinstallation oder für industrielle Prozesssteuerungen.

Für diese Aufgaben werden stationäre, bewegbare oder auch handhaltbare Entfernungsmessgeräte eingesetzt, welche eine optische Entfernungsmessung zu einem ausgewählten Messpunkt ausführen. Zumeist wird hierbei ein Laserstrahl emittiert und nach Reflektion am Ziel wieder empfangen und ausgewertet. Zur Bestimmung der Entfernung stehen dabei verschiedene Messprinzipien zur Verfügung, wie z. B. Phasen- oder Laufzeitmessung.

Insbesondere im Bereich der Bauinstallation oder Bauabnahme werden tragbare und in der Hand zu haltende Geräte verwendet, welche bezüglich einer zu vermessenden Struktur angelegt werden und dann eine Entfernungsmessung zu einer Oberfläche durchführen. Ein für solche Anwendungen geeignetes und typisches handhaltbares Entfernungsmessgerät wird beispielsweise in der EP 0 738 899 und der EP 0 701 702 beschrieben.

Da für die meisten Anwendungen ein auf der anzumessenden Oberfläche sichtbarer Messpunkt vorteilhaft ist, werden zumeist rote Laser als Strahlungsquellen für die Entfernungsmessung verwendet. Mit Entfernungsmessern des Stands der Technik sind so bei grosser Handhabungsfreundlichkeit Genauigkeiten bis in den Millimeterbereich erzielbar.

Bisher verfügbare handhaltbare Entfernungsmessgeräte weisen eine bestimmte Sensorkonfiguration auf und haben somit ab Werk einen festgelegten Funktionsumfang, wobei ein grösserer Funktionsumfang das Gerät in der Regel auch grösser und schwerer macht. Dadurch wird das Gerät mit zunehmendem Funktionsumfang unhandlich, und die Anwendung für den Benutzer anstrengend und kompliziert. Um alle benötigten Funktionen abzudecken, kommt für den Anwender alternativ der Erwerb mehrerer kompakterer Entfernungsmessgeräte mit unterschiedlichem Funktionsumfang in Frage. Dies ist allerdings unnötig teuer, und das Mitführen all dieser Entfernungsmessgeräte ausserdem umständlich.

Es ist daher eine Aufgabe der vorliegenden Erfindung, ein verbessertes System zum handgehaltenen Messen von Entfernungen bereitzustellen.

Insbesondere ist es eine Aufgabe, ein solches System bereitzustellen, durch welches der Funktionsumfang eines handhaltbaren Entfernungsmessgerätes flexibel erweiterbar ist.

Eine weitere Aufgabe der vorliegenden Erfindung ist es, ein austauschbares Sensormodul zum Erweitern des Funktionsumfanges eines handhaltbaren Entfernungsmessgerätes bereitzustellen.

Insbesondere ist es eine Aufgabe, ein solches Sensormodul bereitzustellen, das besonders leicht und kompakt ausgestaltet ist.

Eine weitere Aufgabe der Erfindung ist es, ein solches Sensormodul mit einem geringen konstruktiven Aufwand bereitzustellen.

Mindestens eine dieser Aufgaben wird durch die Verwirklichung der kennzeichnenden Merkmale der unabhängigen Ansprüche gelöst. Vorteilhafte Ausgestaltungen der Erfindung finden sich dabei in den jeweils abhängigen Ansprüchen.

Ein erster Aspekt der Erfindung betrifft ein Sensormodul gemäß Anspruch 1.

Gemäss einer bevorzugten Ausführungsform verfügt das Sensormodul dabei über keine eigene Stromversorgung.

### Erfindungsgemäß

ist das Sensormodul als ein Winkelmessmodul zum Messen mindestens eines Winkels zwischen dem Entfernungsmessgerät und einer Basis ausgestaltet, wobei die mindestens eine elektronische Sensorkomponente mindestens einen Winkelsensor umfasst.

In einer weiteren Ausführungsform ist das Sensormodul als ein Winkelmessmodul zum Messen mindestens zweier Winkel zwischen dem Entfernungsmessgerät und einer Basis ausgestaltet, wobei die mindestens eine elektronische Sensorkomponente mindestens zwei Winkelsensoren umfasst.

In einer weiteren Ausführungsform des erfindungsgemässen Sensormoduls umfasst die mindestens eine elektronische Sensorkomponente einen Laserentfernungsmesser.

In einer weiteren Ausführungsform des erfindungsgemässen Sensormoduls weist das Sensormodul ein ausziehbares Bandmass auf, und die elektronische Sensorkomponente ist dazu ausgestaltet, eine Ausziehweite des Bandmasses zu erfassen. In einer speziellen Ausführungsform umfasst die elektronische Sensorkomponente dabei einen Absolutwertgeber.

In einer weiteren Ausführungsform des erfindungsgemässen Sensormoduls umfasst die elektronische Sensorkomponente einen Farbsensor und/oder eine thermographische Kamera.

In einer weiteren Ausführungsform des erfindungsgemässen Sensormoduls umfasst die elektronische Sensorkomponente einen Feuchtigkeitssensor und/oder Temperatursensor umfasst.

Ein zweiter Aspekt der Erfindung betrifft ein System zum handgehaltenen Messen von Entfernungen zu einem Oberflächenbereich eines Objekts nach Anspruch 8.

Das Entfernungsmessgerät weist eine erste elektronische Schnittstelle auf, und das Sensormodul weist eine zweite elektronische Schnittstelle aufweist, wobei die erste und die zweite Schnittstelle dazu ausgestaltet sind, miteinander verbunden zu werden und eine Datenverbindung zwischen dem Entfernungsmessgerät und dem Sensormodul bereitzustellen. Das Sensormodul ist dazu ausgestaltet, dem Entfernungsmessgerät die Sensordaten über die Datenverbindung bereitzustellen, und das Entfernungsmessgerät weist eine Rechenkomponente zur Verarbeitung der Sensordaten auf. Erfindungsgemäss sind die erste und die zweite Schnittstelle dazu ausgestaltet, elektrische Energie von dem Entfernungsmessgerät an das Sensormodul zu übertragen, und das Sensormodul ist dazu ausgestaltet, die mindestens eine Sensorkomponente mit der übertragenen Energie zu betreiben.

Gemäss einer Ausführungsform des erfindungsgemässen Systems weist das Entfernungsmessgerät zur Bereitstellung der elektrischen Energie eine Akkumulator-Batterie auf.

Gemäss einer weiteren Ausführungsform des erfindungsgemässen Systems ist der erste Laserentfernungsmesser zur Emission eines ersten Laserstrahls in einer ersten Emissionsrichtung auf einen ersten Zielpunkt ausgestaltet. In einer Ausführungsform des Systems umfasst die mindestens eine elektronische Sensorkomponente einen zweiten Laserentfernungsmesser, der zur Emission eines zweiten Laserstrahls in einer zweiten Emissionsrichtung auf einen zweiten Zielpunkt ausgestaltet ist, insbesondere wobei die erste und die zweite Emissionsrichtung parallel oder orthogonal sind.

Gemäss einer weiteren Ausführungsform des erfindungsgemässen Systems ist die Recheneinheit dazu ausgestaltet, eine Entfernung zu einem Zielpunkt auch basierend auf den Sensordaten zu berechnen.

Gemäss einer weiteren Ausführungsform des erfindungsgemässen Systems weist das Entfernungsmessgerät eine Anzeigeeinheit zur Ausgabe gemessener Entfernungen auf, insbesondere ausgestaltet als ein Touchscreen, wobei die Anzeigeeinheit auch zur Ausgabe der Sensordaten ausgestaltet ist.

Gemäss einer weiteren Ausführungsform des erfindungsgemässen Systems ist das Sensormodul als ein Winkelmessmodul zum Messen mindestens eines Winkels zwischen dem Entfernungsmessgerät und einer Basis ausgestaltet, wobei die mindestens eine elektronische Sensorkomponente mindestens einen Winkelsensor umfasst, und die Recheneinheit ist dazu ausgestaltet, basierend auf gemessenen Entfernungen zu einem ersten und einem zweiten Zielpunkt und auf zwischen den Messungen durch den mindestens einen Winkelsensor erzeugten Sensordaten eine Distanz zwischen dem ersten und dem zweiten Zielpunkt zu berechnen.

Das erfindungsgemässe Sensormodul und das erfindungsgemässe System aus handhaltbarem Entfernungsmessgerät und Sensormodul werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a-b: ein gattungsgemässes handhaltbares Entfernungsmessgerät mit einem Laserdistanzmesser;
- Fig. 2a-b: ein erfindungsgemässes System aus handhaltbarem Entfernungsmessgerät und Sensormodul in einer Längsschnittansicht;
- Fig. 3: den Strom- und Informationsfluss in einem erfindungsgemässen System;
- Fig. 4: eine erste beispielhafte Ausführungsform eines erfindungsgemässen Systems;
- Fig. 5: eine zweite beispielhafte Ausführungsform eines erfindungsgemässen Systems; und
- Fig. 6a-c: eine dritte beispielhafte Ausführungsform eines erfindungsgemässen Systems.

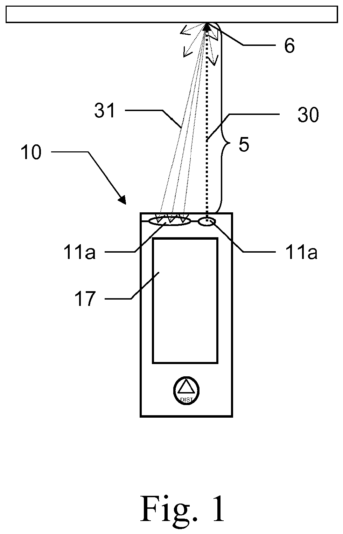

In Figur 1 ist ein gattungsgemässes handhaltbares Entfernungsmessgerät 10 zum Vermessen von Entfernungen in Aussenansicht dargestellt. Es weist ein Gehäuse auf, in dem die notwendigen elektronischen Komponenten angeordnet sind. Das Gehäuse ist dabei so ausgebildet, dass das Entfernungsmessgerät 10 in der Hand gehalten und auch an einem zu vermessenden Punkt definiert angelegt oder angeschlagen werden kann. Am Gehäuse können zu diesem Zweck entsprechende Anlagekanten oder ausklappbare oder aufsteckbare Anschlagelemente angebracht sein, wie sie beispielsweise in der WO 02/50564 beschrieben werden. Das Entfernungsmessgerät 10 beinhaltet an seiner Vorderseite einen Laserentfernungsmesser 11 mit einer Laseraussendeeinheit 11a und einer Laserempfangseinheit 11b, die über optische Öffnungen im Gehäuse verfügen. Auf der Oberseite des Geräts befinden sich eine Eingabe- und Anzeigevorrichtung 17 in Form eines Touchscreens. Ausserdem kann eine - hier nicht dargestellte
- Zielsuch-Kamera mit einer Zoomfunktionalität zur Aufnahme von auf der Anzeigevorrichtung 17 anzeigbaren Bildern in Richtung der Emissionsrichtung vorgesehen sein.

Erfindungsgemäss sendet die Laseraussendeeinheit 11a einen Laserstrahl 30 zu einem Messpunkt 6 auf einem Objekt (beispielsweise einer Wand) aus. Das Objekt weist eine natürlich rauhe Oberfläche auf, von der optische Strahlen streuend reflektiert werden. Ein Teil der gestreut reflektierten Strahlen 31 des Laserstrahls 30 wird von der Laserempfangseinheit 11b eingesammelt, detektiert und in ein elektrisches Signal umgewandelt. Das Signal wird in an sich bekannter Weise zum Bestimmen des digitalen Werts der Distanz 5 von einer elektronischen Schaltung ausgewertet. Zur Entfernungsermittlung kann z. B. Phasen- oder Laufzeitmessung eingesetzt werden. Dabei wird auch die Erstreckung zwischen der Laserempfangseinheit 11b und einem Messanschlag berücksichtigt. Der durch die Auswertung digital bestimmte Wert der gemessenen Entfernung 5 wird dann durch die Anzeigevorrichtung 17 einem Benutzer zur Verfügung gestellt.

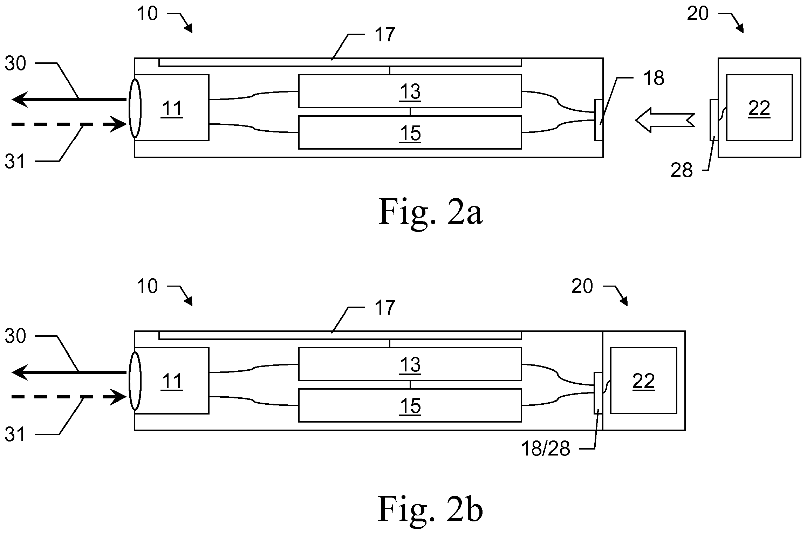

Figur 2a zeigt ein System aus einem Entfernungsmessgerät 10 und einem daran anschliessbaren Sensormodul 20 in einer Längsschnittansicht. Das Entfernungsmessgerät 10 weist einen Laserentfernungsmesser 11 zum Messen von Entfernungen zu entfernten Objekten auf. Dieser ist dazu ausgestaltet, einen Laserstrahl 30 auszusenden und gestreut reflektierte Strahlen 31 des Laserstrahls zu empfangen. Das Entfernungsmessgerät weist ausserdem einen Touchscreen 17 als Eingabeund Anzeigevorrichtung auf. Als interne Komponenten sind eine Rechenkomponente 13 mit einer elektronischen Schaltung zur Verarbeitung von vom Laserentfernungsmesser 11 bereitgestellten Sensordaten und ein Akkumulator 15 zur Bereitstellung elektrischer Energie für die Komponenten des Entfernungsmessgerätes 10 dargestellt.

Das Entfernungsmessgerät 10 weist eine erste elektronische Schnittstelle 18 auf zur Verbindung des Entfernungsmessgerätes 10 mit einem externen Sensormodul 20 zu einem erfindungsgemässen System. Das Sensormodul 20 weist eine elektronische Sensorkomponente 22 und eine zur ersten elektronischen Schnittstelle 18 kompatible zweite elektronische Schnittstelle 28 auf. Die beiden Schnittstellen 18, 28 sind dabei speziell zur Verbindung miteinander ausgestaltet und dazu, sowohl Daten als auch elektrischen Strom zu übertragen.

In Figur 2b sind das Entfernungsmessgerät 10 und das Sensormodul 20 aus Figur 2a im zusammengeschlossenen Zustand dargestellt. Die Schnittstellen 18 und 28 sind derart zusammengesteckt, dass eine Datenverbindung zwischen dem Entfernungsmessgerät 10 und dem Sensormodul 20 besteht, sodass Sensordaten der Sensorkomponente 22 an die Recheneinheit 13 übermittelbar sind. Gleichzeitig ermöglichen die zusammengeschlossenen Schnittstellen eine Stromversorgung des Sensormoduls 20 über den Akkumulator des Entfernungsmessgerätes 10, sodass die elektronische Sensorkomponente 22 des Sensormoduls 20 die Sensordaten erfassen kann. Dies ermöglicht, dass das Sensormodul 20 passiv ausgestaltet sein kann, d. h. keine eigene Energieversorgung aufzuweisen braucht. Dadurch kann es vorteilhaft besonders kompakt und leicht ausgestaltet sein.

Optional weisen Entfernungsmessgerät 10 und Sensormodul 20 neben den elektronischen Schnittstellen 18, 28 weitere Verbindungselemente zur mechanischen Fixierung aneinander auf.

Vorzugsweise sind die Gehäuse von Entfernungsmessgerät 10 und Sensormodul 20 derart beschaffen und aufeinander abgestimmt, dass ihre Oberflächen im zusammengeschlossenen Zustand bündig abschliessen.

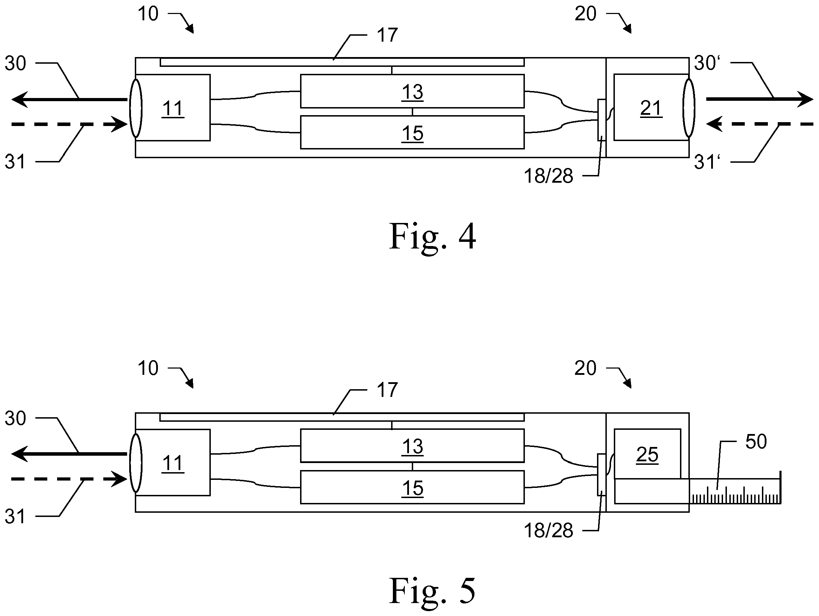

Als Sensorkomponenten 22 sind prinzipiell alle elektronischen Sensoren denkbar, die zum Funktionieren Elektrizität benötigen und die Sensordaten erzeugen. Insbesondere kann es sich dabei um solche Sensoren handeln, die generische Funktionen des Entfernungsmessgerätes direkt oder indirekt ergänzen, bzw. einem Benutzer zusätzliche Messungsrelevante Informationen bereitstellen, beispielsweise Neigungssensoren, zusätzliche Laserentfernungsmesser (siehe Figur 4) oder Zielsuchkameras. Weiterhin sind auch solche Sensoren vorteilhaft verwendbar, die für einen Benutzer, der das Entfernungsmessgerät 10 verwendet, im Rahmen seiner Tätigkeit nützlich sind. Im Rahmen der Bauinstallation oder Bauabnahme kann dies beispielsweise ein Feuchtigkeitsund/oder Temperatursensor sein. Ebenso kann die Sensorkomponente 22 als Farbsensor oder thermographische Kamera ausgestaltet sein. Durch den modularen Aufbau, der einen schnellen Wechsel zwischen verschiedenen Sensormodulen 20 ermöglicht, kann dem Benutzer vorteilhaft eine breite Funktionsvielfalt zur Verfügung gestellt werden.

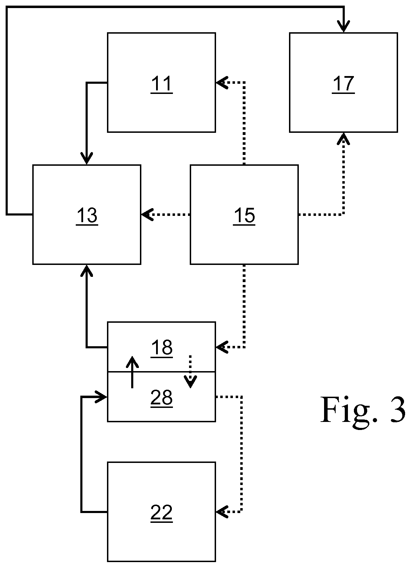

Figur 3 illustriert schematisch den Fluss von Daten und Energie in dem System aus Figur 2b. Datenflüsse sind dabei mit durchgezogenen Linien dargestellt, und Stromflüsse mit punktierten Linien.

Die Energieversorgungseinheit 15 (z. B. eine Akkumulator-Batterie) des Entfernungsmessgerätes versorgt zum einen die anderen Komponenten des Entfernungsmessgerätes, also den Laserentfernungsmesser 11, die Recheneinheit 13 und die Anzeigeeinheit 17. Zum anderen stellt sie elektrische Energie für die erste Schnittstelle 18 bereit. Im zusammengeschlossenen Zustand der Schnittstellen 18, 28 wird so ebenfalls die Sensorkomponente 22 des Sensormoduls durch die Energieversorgungseinheit 15 mit Strom versorgt.

Der Laserentfernungsmesser 11 stellt der Recheneinheit 13 Daten zur Verfügung, anhand welcher eine Entfernung zu einem angezielten Ziel ermittelbar ist. Diese Entfernung kann dann der Anzeigeeinheit 17 bereitgestellt werden, um sie einem Benutzer anzuzeigen. Die Sensorkomponente 22 des angeschlossenen Sensormoduls stellt über die beiden Schnittstellen ebenfalls Daten für die Recheneinheit 13 bereit, die beispielsweise in die Berechnung der Entfernung einfliessen können oder dem Benutzer auf der Anzeigeeinheit 17 anzeigbar sind.

Figur 4 zeigt eine erste beispielhafte Ausführungsform eines erfindungsgemässen Systems. Das Entfernungsmessgerät 10 entspricht dem in Figur 2b dargestellten. Das Sensormodul 20 weist als Sensorkomponente einen zweiten Laserentfernungsmesser 21 auf. Dieser ist dazu ausgestaltet, einen zweiten Laserstrahl 30' auszusenden und gestreut reflektierte Strahlen 31' des zweiten Laserstrahls zu empfangen. Im zusammengeschlossenen Zustand des Systems wird der zweite Laserentfernungsmesser 21 über die Schnittstellen 18, 28 von der Energieversorgungseinheit 15 des Entfernungsmessgerätes 10 mit Energie versorgt. Ebenfalls über die Schnittstellen 18, 28 sendet der zweite Laserentfernungsmesser 21 von ihm erfasste Daten an die Recheneinheit 13 des Entfernungsmessgerätes 10. Es kann dann beispielsweise eine Gesamtentfernung zwischen zwei durch die Laserstrahlen 30, 30' angezielten Messpunkten ermittelt und angezeigt werden.

Figur 5 zeigt eine zweite beispielhafte Ausführungsform eines erfindungsgemässen Systems. Hier weist das Sensormodul ein ausziehbares Bandmass 50 auf. Die durch die Energieversorgungseinheit 15 des Entfernungsmessgerätes 10 mit Energie versorgte Sensorkomponente ist hier als ein Absolutwertgeber 25 ausgestaltet, durch welchen eine Ausziehweite des Bandmasses 50 ermittelbar ist. Dieser Wert kann an die Recheneinheit 13 übermittelt werden. Wie beispielsweise in der EP 1 718 989 EP dargestellt, kann dann eine Entfernung zwischen einem durch den Laserstrahl 30 angezielten Messpunkt und einem durch das Ende des Bandmasses 50 definierten Anschlagpunkt ermittelt und dem Benutzer auf der Anzeigeeinheit 17 angezeigt werden.

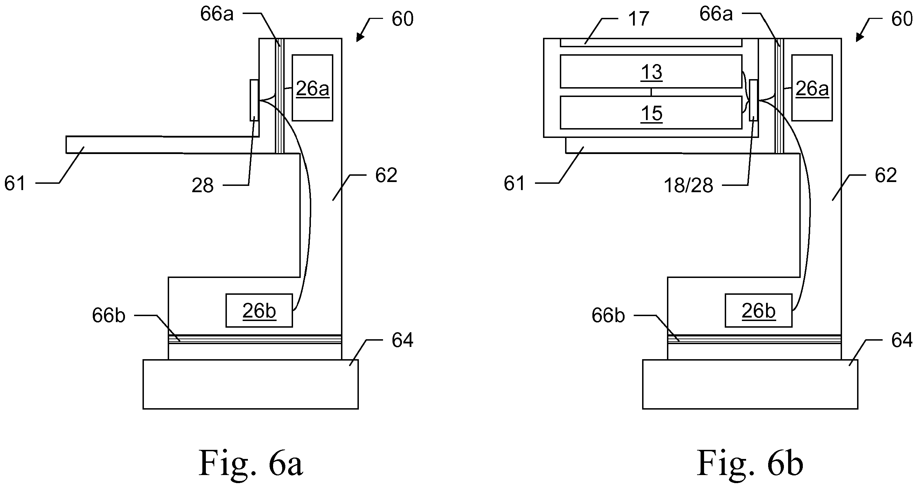

In den Figuren 6a-c wird eine dritte beispielhafte Ausführungsform eines erfindungsgemässen Systems gezeigt, mittels welchem unter anderem Messungen zwischen zwei entfernten Punkten durchgeführt werden können. Auch mit vielen derzeit erhältlichen handhaltbaren Entfernungsmessgeräten können Messungen von einem Punkt zu einem anderen Punkt durchgeführt werden, zu dem eine Sichtverbindung besteht. Eine Möglichkeit zur Bestimmung einer Entfernung zwischen zwei Punkten, die auch anwendbar ist, wenn zwischen den Punkten keine Sichtverbindung besteht, ist die Berechnung mittels Trigonometrie. Dies ist bereits aus bodengestützten Vermessungsgeräten, wie Theodoliten oder Totalstationen, hinlänglich bekannt. Ein gattungsgemässes handhaltbares Entfernungsmessgerät mit dieser Fähigkeit wird in der WO 2014/027002 A1 beschrieben, weist aber nicht den erfindungsgemässen modularen Aufbau auf.

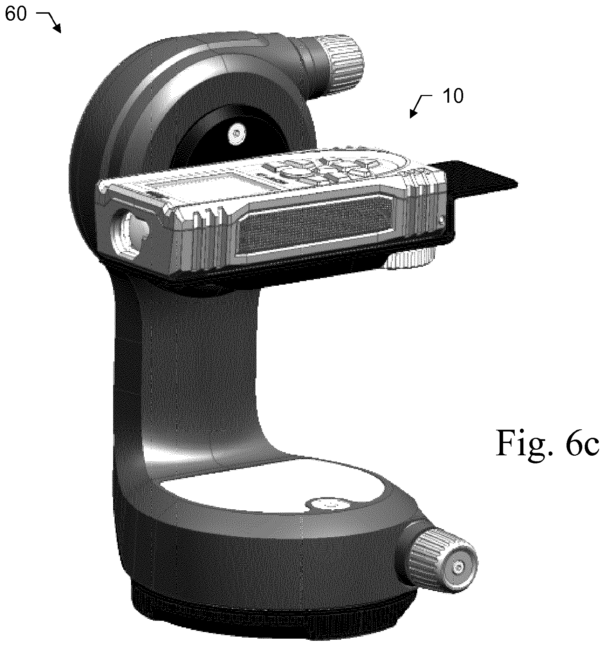

Figur 6a zeigt das als Winkelmessmodul 60 ausgestaltete Sensormodul. Dieses weist eine Aufnahme 61 auf, die gemeinsam mit der Schnittstelle 28 zur spielfreien Befestigung eines Entfernungsmessgerätes 10 ausgestaltet ist. In Figur 6b ist das Winkelmessmodul 60 mit dem daran befestigtem Entfernungsmessgerät 10 dargestellt. Die Figur 6c zeigt eine beispielhafte Ausgestaltung des an einem Winkelmessmodul 60 befestigten Entfernungsmessgeräts 10 in einer dreidimensionalen Ansicht.

Das Winkelmessmodul 60 ist auf einer Basis 64, z. B. einem Stativ, befestigbar ausgestaltet und stellt eine Verstellbarkeit der Ausrichtung des Entfernungsmessgerätes 10 in zwei Freiheitsgraden gegenüber der Basis 64 bereit. Die Aufnahme 61 ist gegenüber einer Stütze 62 mittels eines ersten Scharniers 66a drehbar gelagert, und die Stütze 62 gegenüber der Basis 64 mittels eines zweiten Scharniers 66b. Zwei Winkelsensoren 26a und 26b an den Scharnieren 66a, 66b sind dazu ausgestaltet einen jeweiligen Drehwinkel zu bestimmen und die entsprechenden Daten der Recheneinheit 13 des verbundenen Entfernungsmessgerätes 10 bereitzustellen. Das Winkelmessmodul 60 ist passiv ausgestaltet, d. h. es weist keine eigene Stromversorgung auf sondern bezieht die Energie für die Winkelsensoren 26a und 26b über die Schnittstellen 18, 28 durch die Energieversorgungseinheit 15 des Entfernungsmessgerätes 10.

Optional können Elektromotoren vorgesehen sein, um die Ausrichtung des Entfernungsmessgerätes 10 motorisiert zu verändern. Diese können ebenfalls durch die Energieversorgungseinheit 15 des Entfernungsmessgerätes 10 mit der nötigen elektrischen Energie versorgt werden.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

## Patentansprüche

1. Winkelmessmodul (60) zur modularen Verbindung mit einem handhaltbaren Entfernungsmessgerät (10) und zur Bereitstellung von Sensordaten für das Entfernungsmessgerät (10), aufweisend
- eine elektronische Schnittstelle (28) zur Verbindung mit einer entsprechenden Schnittstelle (18) des Entfernungsmessgerätes (10), und
- mindestens eine elektronische Sensorkomponente zur Erzeugung der Sensordaten, wobei die mindestens eine elektronische Sensorkomponente mindestens einen Winkelsensor (26a, 26b) umfasst,
wobei das Winkelmessmodul (60)
- dazu ausgestaltet ist, auf einer Basis (64) befestigt zu werden, und eine Verstellbarkeit der Ausrichtung des Entfernungsmessgerätes (10) in zwei Freiheitsgraden gegenüber der Basis (64) bereitstellt,
- zum Messen mindestens eines Winkels zwischen dem Entfernungsmessgerät (10) und der Basis (64) ausgestaltet ist, und
- zur Übertragung der Sensordaten an das Entfernungsmessgerät (10) ausgestaltet ist, wenn die elektronische Schnittstelle (28) mit der entsprechenden Schnittstelle (18) des Entfernungsmessgerätes (10) verbunden ist,
**dadurch gekennzeichnet, dass**
- die elektronische Schnittstelle (28) zur Übertragung elektrischer Energie von dem Entfernungsmessgerät (10) an das Winkelmessmodul (60) ausgestaltet ist, wenn sie mit der entsprechenden Schnittstelle (18) des Entfernungsmessgerätes (10) verbunden ist, und
- das Winkelmessmodul (60) dazu ausgestaltet ist, die mindestens eine Sensorkomponente (21, 22, 25, 26) mittels der von dem Entfernungsmessgerät (10) übertragenden elektrischen Energie zu betreiben.

2. Winkelmessmodul (60) nach Anspruch 1,
**dadurch gekennzeichnet, dass**
das Winkelmessmodul (60) über keine eigene Stromversorgung verfügt.

3. Winkelmessmodul (60) nach Anspruch 1 oder Anspruch 2,
**dadurch gekennzeichnet, dass**
das Winkelmessmodul (60) zum Messen mindestens zweier Winkel zwischen dem Entfernungsmessgerät (10) und der Basis (64) ausgestaltet ist, wobei die mindestens eine elektronische Sensorkomponente mindestens zwei Winkelsensoren (26a, 26b) umfasst.

4. Winkelmessmodul (60) nach einem der vorangehenden Ansprüche,
**dadurch gekennzeichnet, dass**
die Basis (64) ein Stativ ist.

5. Winkelmessmodul (60) nach einem der vorangehenden Ansprüche,
**gekennzeichnet durch**
eine Aufnahme (61), die gemeinsam mit der Schnittstelle (28) zur spielfreien Befestigung des Entfernungsmessgerätes (10) ausgestaltet ist.

6. Winkelmessmodul (60) nach Anspruch 5,
**dadurch gekennzeichnet, dass**
die Aufnahme (61) gegenüber einer Stütze (62) mittels eines ersten Scharniers (66a) drehbar gelagert ist, und die Stütze (62) gegenüber der Basis (64) mittels eines zweiten Scharniers (66b) drehbar gelagert ist, wobei zwei Winkelsensoren (26a, 26b) an den Scharnieren (66a, 66b) dazu ausgestaltet sind, einen jeweiligen Drehwinkel zu bestimmen und die entsprechenden Daten einer Recheneinheit (13) eines verbundenen Entfernungsmessgerätes (10) bereitzustellen.

7. Winkelmessmodul (60) nach einem der vorangehenden Ansprüche,
**gekennzeichnet durch**
Elektromotoren, die dazu ausgestaltet sind, eine Ausrichtung des Entfernungsmessgerätes (10) motorisiert zu verändern.

8. System zum handgehaltenen Messen von Entfernungen (5) zu einem Oberflächenbereich eines Objekts, wobei das System modular aufgebaut ist und ein handhaltbares Entfernungsmessgerät (10) mit einem Laserentfernungsmesser (11) und ein Winkelmessmodul (60) mit mindestens einer elektronischen Sensorkomponente (21, 22, 25, 26) zur Erzeugung von Sensordaten aufweist, wobei
- das Winkelmessmodul (60) dazu ausgestaltet ist, auf der Basis (64) befestigt zu werden, und eine Verstellbarkeit der Ausrichtung des Entfernungsmessgerätes (10) in zwei Freiheitsgraden gegenüber der Basis (64) bereitstellt,
- das Winkelmessmodul (60) zum Messen mindestens eines Winkels zwischen dem Entfernungsmessgerät (10) und der Basis (64) ausgestaltet ist,
- die mindestens eine elektronische Sensorkomponente mindestens einen Winkelsensor (26a, 26b) umfasst,
- das Entfernungsmessgerät (10) eine erste elektronische Schnittstelle (18) aufweist,
- das Winkelmessmodul (60) eine zweite elektronische Schnittstelle (28) aufweist,
- die erste und die zweite Schnittstelle (18, 28) dazu ausgestaltet sind, miteinander verbunden zu werden und eine Datenverbindung zwischen dem Entfernungsmessgerät (10) und dem Winkelmessmodul (60) bereitzustellen,
- das Winkelmessmodul (60) dazu ausgestaltet ist, dem Entfernungsmessgerät (10) die Sensordaten über die Datenverbindung bereitzustellen, und
- das Entfernungsmessgerät (10) eine Rechenkomponente (13) zur Verarbeitung der Sensordaten aufweist,
**dadurch gekennzeichnet, dass**
- die erste und die zweite Schnittstelle (18, 28) dazu ausgestaltet sind, elektrische Energie von dem Entfernungsmessgerät (10) an das Winkelmessmodul (60) zu übertragen,
- das Winkelmessmodul (60) dazu ausgestaltet ist, den mindestens einen Winkelsensor (26a, 26b) mit der übertragenen Energie zu betreiben, und
- die Recheneinheit (13) dazu ausgestaltet ist, basierend auf gemessenen Entfernungen (5) zu einem ersten und einem zweiten Zielpunkt (6) und auf zwischen den Messungen durch den mindestens einen Winkelsensor (26a, 26b) erzeugten Sensordaten eine Distanz zwischen dem ersten und dem zweiten Zielpunkt (6) zu berechnen.

9. System nach Anspruch 8,
**dadurch gekennzeichnet, dass**
das Entfernungsmessgerät (10) zur Bereitstellung der elektrischen Energie eine Akkumulator-Batterie (15) aufweist.

10. System nach Anspruch 8 oder Anspruch 9,
**dadurch gekennzeichnet, dass**
das Winkelmessmodul (60) gemäss einem der Ansprüche 1 bis 7 ausgestaltet ist.

11. System nach einem der Ansprüche 8 bis 10,
**dadurch gekennzeichnet, dass**
der Laserentfernungsmesser (11) zur Emission eines Laserstrahls (30) in einer Emissionsrichtung auf einen Zielpunkt (6) ausgestaltet ist.

12. System nach Anspruch 11,
**dadurch gekennzeichnet, dass**
die Recheneinheit (13) dazu ausgestaltet ist, eine Entfernung (5) zu einem Zielpunkt (6) auch basierend auf den Sensordaten zu berechnen.

13. System nach einem der Ansprüche 9 bis 12,
**dadurch gekennzeichnet, dass**
das Entfernungsmessgerät (10) eine Anzeigeeinheit (17) zur Ausgabe gemessener Entfernungen aufweist, wobei die Anzeigeeinheit (17) auch zur Ausgabe der Sensordaten ausgestaltet ist.

14. System nach Anspruch 13,
**dadurch gekennzeichnet, dass**
die Anzeigeeinheit (17) als ein Touchscreen ausgestaltet ist.

## Claims

1. Angle measuring module (60) for modular connection to a handheld rangefinder instrument (10) and for providing sensor data for the rangefinder instrument (10), having
- an electronic interface (28) for connection to an applicable interface (18) of the rangefinder instrument (10), and
- at least one electronic sensor component for generating the sensor data, wherein the at least one electronic sensor component comprises at least one angle sensor (26a, 26b),
wherein the angle measuring module (60)
- is configured so as to be mountable on a base (64), and provides a level of adjustability for the orientation of the rangefinder instrument (10) in two degree of freedom relative to the base (64),
- is configured for measuring at least one angle between the rangefinder instrument (10) and a base (64), and
- is configured for transmitting the sensor data to the rangefinder instrument (10) when the electronic interface (28) is connected to the applicable interface (18) for the rangefinder instrument (10),
**characterized in that**
- the electronic interface (28) is configured for transmitting electric power from the rangefinder instrument (10) to the angle measuring module (60) when it is connected to the applicable interface (18) of the rangefinder instrument (10), and
- the angle measuring module (20, 60) is configured to operate the at least one sensor component (21, 22, 25, 26) by means of the electric power transmitted by the rangefinder instrument (10).

2. Angle measuring module (60) according to Claim 1, **characterized in that**
the angle measuring module (60) has no power supply of its own.

3. Angle measuring module (60) according to Claim 1 or Claim 2,
**characterized in that**
the angle measuring module (60) is configured for measuring at least two angles between the rangefinder instrument (10) and a base (64), wherein the at least one electronic sensor component comprises at least two angle sensors (26a, 26b).

4. Angle measuring module (60) according to any one of the preceding claims,
**characterized in that**
the base (64) is a tripod.

5. Angle measuring module (60) according to any one of the preceding claims,
**characterized in that**
a receiving area (61) that is configured together with the interface (28) for mounting the rangefinder instrument (10) without play.

6. Angle measuring module (60) according to claim 5, **characterized in that**
the receiving area (61) is supported rotatably relative to a support (62) by means of a first hinge (66a), and the support (62) is supported rotatably relative to the base (64) by means of a second hinge (66b), whereby two angle sensors (26a, 26b) on the hinges (66a, 66b) are configured to determine a respective angle of rotation and to provide the applicable data to a computation unit (13) of a connected rangefinder instrument (10).

7. Angle measuring module (60) according to any one of the preceding claims
**characterized in that**
electric motors configured to alter the orientation of the rangefinder instrument (10) in a motorized manner.

8. System for the handheld measurement of distances (5) to a surface region of an object, wherein the system is modularly designed and has a handheld rangefinder instrument (10) having a laser rangefinder (11) and has an angle measuring module (60) having at least one electronic sensor component (21, 22, 25, 26) for generating sensor data, wherein
- the angle measuring module (60) is configured so as to be mounted on the base (64), and provides a level of adjustability for the orientation of the rangefinder instrument (10) in two degree of freedom relative to the base (64),
- the angle measuring module (60) is configured for measuring at least one angle between the rangefinder instrument (10) and a base (64),
- the at least one electronic sensor component comprises at least one angle sensor (26a, 26b),
- the rangefinder instrument (10) has a first electronic interface (18),
- the angle measuring module (60) has a second electronic interface (28),
- the first and second interfaces (18, 28) are configured to be connected to one another and to provide a data connection between the rangefinder instrument (10) and the sensor module (20, 60),
- the angle measuring module (60) is configured to provide the rangefinder instrument (10) with the sensor data via the data connection, and
- the rangefinder instrument (10) has a computation component (13) for processing the sensor data,
**characterized in that**
- the first and second interfaces (18, 28) are configured to transmit electric power from the rangefinder instrument (10) to the angle measuring module (60), and
- the angle measuring module (60) is configured to operate the at least one angle sensor (25a, 26a) using the transmitted power, and
- the computation unit (13) is configured to take measured distances (5) to a first and a second target (6) and to take sensor data generated by the at least one angle sensor (26a, 26b) between the measurements as a basis for computing a distance between the first and second targets (6).

9. System according to Claim 8,
**characterized in that**
the rangefinder instrument (10) has a storage battery (15) for providing the electric power.

10. System according to Claim 8 or Claim 9, **characterized in that**
the angle measuring module (60) is embodied according to one of claims 1 to 7.

11. System according to one of Claims 8 to 10,
**characterized in that**
the laser rangefinder (11) is configured for emitting a laser beam (30) in a emission direction to a target (6).

12. System according to Claim 11,
**characterized in that**
the computation unit (13) is configured to compute a distance (5) to a target (6) also based on the sensor data.

13. System according to any one of Claims 9 to 12,
**characterized in that**
the rangefinder instrument (10) has a display unit (17) for outputting measured distances, wherein the display unit (17) is also configured for outputting the sensor data.

14. System according to Claim 13,
**characterized in that**
the display unit (17) is configured as a touchscreen.

## Revendications

1. Module de mesure d'angle (60) prévu pour être relié de façon modulaire à un appareil de mesure de distance portatif (10) et pour fournir des données de détection à l'appareil de mesure de distance (10), présentant
- une interface électronique (28) prévue pour être reliée à une interface correspondante (18) de l'appareil de mesure de distance (10) et
- au moins un composant de détection électronique prévu pour générer les données de détection, ledit au moins un composant de détection électronique comprenant au moins un capteur d'angle (26a, 26b),
le module de mesure d'angle (60)
- étant conçu pour être fixé sur une base (64) et fournissant une possibilité de réglage de l'orientation de l'appareil de mesure de distance (10) selon deux degrés de liberté par rapport à la base (64),
- étant conçu pour mesurer au moins un angle entre l'appareil de mesure de distance (10) et la base (64), et
- étant conçu pour transmettre les données de détection à l'appareil de mesure de distance (10) lorsque l'interface électronique (28) est reliée à l'interface correspondante (18) de l'appareil de mesure de distance (10),
**caractérisé en ce que**
- l'interface électronique (28) est conçue pour transmettre de l'énergie électrique de l'appareil de mesure de distance (10) au module de mesure d'angle (60) lorsqu'elle est reliée à l'interface correspondante (18) de l'appareil de mesure de distance (10) et
- le module de mesure d'angle (60) est conçu pour faire fonctionner ledit au moins un composant de détection (21, 22, 25, 26) au moyen de l'énergie électrique transmise par l'appareil de mesure de distance (10).

2. Module de mesure d'angle (60) selon la revendication 1,
**caractérisé en ce que**
le module de mesure d'angle (60) ne dispose pas de sa propre alimentation électrique.

3. Module de mesure d'angle (60) selon la revendication 1 ou la revendication 2, **caractérisé en ce que**
le module de mesure d'angle (60) est conçu pour mesurer au moins deux angles entre l'appareil de mesure de distance (10) et la base (64), ledit au moins un composant de détection électronique comprenant au moins deux capteurs d'angle (26a, 26b).

4. Module de mesure d'angle (60) selon l'une des revendications précédentes, **caractérisé en ce que**
la base (64) est un trépied.

5. Module de mesure d'angle (60) selon l'une des revendications précédentes, **caractérisé par**
un logement (61) qui est conçu, conjointement avec l'interface (28), pour la fixation sans jeu de l'appareil de mesure de distance (10).

6. Module de mesure d'angle (60) selon la revendication 5,
**caractérisé en ce que**
le logement (61) est monté de manière rotative par rapport à un support (62) au moyen d'une première charnière (66a) et le support (62) est monté de manière rotative par rapport à la base (64) au moyen d'une deuxième charnière (66b), deux capteurs d'angle (26a, 26b) sur les charnières (66a, 66b) étant conçus pour déterminer un angle de rotation respectif et pour fournir les données correspondantes à une unité de calcul (13) d'un appareil de mesure de distance (10) relié.

7. Module de mesure d'angle (60) selon l'une des revendications précédentes, **caractérisé par**
des moteurs électriques qui sont conçus pour modifier de manière motorisée une orientation de l'appareil de mesure de distance (10).

8. Système pour la mesure à la main de distances (5) à une zone de surface d'un objet, le système étant de construction modulaire et présentant un appareil de mesure de distance portatif (10) comportant un appareil de mesure de distance par laser (11) et un module de mesure d'angle (60) comportant au moins un composant de détection électronique (21, 22, 25, 26) pour générer des données de détection, dans lequel :
- le module de mesure d'angle (60) est conçu pour être fixé sur la base (64) et fournit une possibilité de réglage de l'orientation de l'appareil de mesure de distance (10) selon deux degrés de liberté par rapport à la base (64),
- le module de mesure d'angle (60) est conçu pour mesurer au moins un angle entre l'appareil de mesure de distance (10) et la base (64),
- ledit au moins un composant de détection électronique comprend au moins un capteur d'angle (26a, 26b),
- l'appareil de mesure de distance (10) présente une première interface électronique (18),
- le module de mesure d'angle (60) présente une deuxième interface électronique (28),
- la première et la deuxième interface (18, 28) sont conçues pour être reliées entre elles et pour fournir une liaison de données entre l'appareil de mesure de distance (10) et le module de mesure d'angle (60),
- le module de mesure d'angle (60) est conçu pour fournir les données de détection à l'appareil de mesure de distance (10) via la liaison de données et
- l'appareil de mesure de distance (10) présente un composant de calcul (13) pour traiter les données de détection,
**caractérisé en ce que**
- la première et la deuxième interface (18, 28) sont conçues pour transmettre de l'énergie électrique de l'appareil de mesure de distance (10) au module de mesure d'angle (60),
- le module de mesure d'angle (60) est conçu pour faire fonctionner ledit au moins un capteur d'angle (26a, 26b) avec l'énergie transmise et
- l'unité de calcul (13) est conçue pour, sur la base des distances mesurées (5) à un premier et un deuxième point cible (6) et de données de détection générées entre les mesures par ledit au moins un capteur d'angle (26a, 26b), calculer une distance entre le premier et le deuxième point cible (6).

9. Système selon la revendication 8,
**caractérisé en ce que**
l'appareil de mesure de distance (10) présente une batterie d'accumulateurs (15) pour fournir l'énergie électrique.

10. Système selon la revendication 8 ou la revendication 9,
**caractérisé en ce que**
le module de mesure d'angle (60) est conçu selon l'une des revendications 1 à 7.

11. Système selon l'une des revendications 8 à 10,
**caractérisé en ce que**
l'appareil de mesure de distance par laser (11) est conçu pour émettre un faisceau laser (30) dans une direction d'émission vers un point cible (6).

12. Système selon la revendication 11,
**caractérisé en ce que**
l'unité de calcul (13) est conçue pour calculer une distance (5) à un point cible (6) également sur la base des données de détection.

13. Système selon l'une des revendications 9 à 12,
**caractérisé en ce que**
l'appareil de mesure de distance (10) présente une unité d'affichage (17) pour fournir en sortie les distances mesurées, l'unité d'affichage (17) étant également conçue pour fournir en sortie les données de détection.

14. Système selon la revendication 13,
**caractérisé en ce que**
l'unité d'affichage (17) est conçue comme un écran tactile.
